(19) **Europäisches Patentamt**
**European Patent Office**
**Office européen des brevets**

(11) **EP 2 698 532 B1**

(12) **EUROPEAN PATENT SPECIFICATION**

(45) Date of publication and mention
of the grant of the patent:
**05.08.2015 Bulletin 2015/32**

(51) Int Cl.:
***F03D 3/06*** (2006.01)

(21) Application number: **13179647.6**

(22) Date of filing: **07.08.2013**

(54) **Vertical axis wind turbine and blade for vertical axis wind turbine**

Windturbine mit vertikaler Achse und Schaufel für Windturbine mit vertikaler Achse

Éolienne à axe vertical et pale d'éolienne pour turbine à axe vertical

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.08.2012 IT PD20120247**

(43) Date of publication of application:
**19.02.2014 Bulletin 2014/08**

(73) Proprietor: **Wind Twentyone S.r.l.**
**35020 Albignasego (PD) (IT)**

(72) Inventors:
• **Raciti Castelli, Marco**
**I-31100 Treviso (IT)**
• **Bedon, Gabriele**
**I-30034 Mira (VE) (IT)**
• **Benini, Ernesto**
**I-35038 Torreglia (PD) (IT)**

(74) Representative: **Gallo, Luca**
**Gallo & Partners S.r.l.**
**Via Rezzonico, 6**
**35131 Padova (IT)**

(56) References cited:
**GB-A- 2 451 670          US-A1- 2008 145 224
US-A1- 2011 171 025**

**Description**

The present invention regards a vertical axis wind turbine and a blade for vertical axis wind turbine according to the preamble of the respective independent claims.

The vertical axis turbine and the relative wind blade according to the present invention are adapted to be employed in order to transform, in a *per se* conventional manner, the kinetic energy of the wind into mechanical energy and hence into electrical energy with high aerodynamic efficiency.

The vertical axis turbine and the relative wind blade, object of the present invention, are therefore inserted in the technological field of renewable energies and, more particularly, in the industrial field of the production of wind generators.

State of the art

As is known, the need of electrical energy from renewable resources, including wind energy, has increased over the years, especially due to the increase of the costs of fossil fuels as well as due to the environmental requirements for preventing the emission of pollutants.

Such circumstance has determined an important impulse in the development of wind turbines with the object of electrical energy production, such turbines currently present on the market in two different types with horizontal axis and with vertical axis.

The present invention exclusively refers to turbines and to blades for turbines, of the type with vertical rotation axis.

The vertical axis turbines have several advantages with respect to the horizontal axis turbines, the most significant of which is constituted by the independence of the functioning from the wind origin direction, which facilitates the use thereof in very populated areas, generally characterized by winds with inconstant direction.

In recent years, there has been a growing interest in vertical axis wind turbines, to be employed for small-size electrical energy production plants as well, with the objective of decentralizing the production of electrical energy from large plants to cities and rural communities.

Among the vertical axis wind turbines, the type "with lift" is known on the market; the most well-known embodiment thereof is constituted by the Darrieus turbine with the name of the inventor G. J. M. Darrieus who, in 1931, filed the patent application thereof in the United States with No. US 1,835,018. Such turbine, as described in the aforesaid patent, comprises a vertical rotation shaft and a plurality of blades, substantially rigid, mechanically coupled at their upper and lower ends to the shaft in order to rotate it and generate electrical energy in a conventional manner by means of a current generator coupled to the rotation shaft. Each blade has the shape of an elongated body which is substantially extended with semicircular arc between its two ends and has section configured with wing profile, constant for its entire longitudinal extension. Such wing profile is defined, in a *per se* known manner, by a dorsal surface and a ventral surface which are extended from the leading edge to the trailing edge of the air flow. The different pressures produced by the air flow on the surfaces of the wing profile determine fluid-dynamic forces acting on the profile itself, which can be split into a lift component, responsible for the rotation of the turbine, and a resistance component.

The known turbines, of the type described above, have several drawbacks, including a not particularly high efficiency, the formation of air vortices which in addition to not allowing the attainment of high efficiency, as stated, also cause irritating noise, as well as the generation of undesired twisting torques along the extension of the blades due to the sudden and repetitive passage of the blades themselves between angular work positions, in which the latter interfere with the flow of the wind by generating a lift component responsible for the rotation of the blade, and rest positions, in which the blades are traversed by the air flow without however generating significant fluid-dynamic forces on the same blades.

In order to improve in particular the distribution of the forces along the extension of the blades upon varying the angular position assumed by the latter and reduce the formation of the aforesaid undesired twisting torques on the blades, turbines have been developed of the abovementioned "Darrieus" type, described for example in the patent US 5,405,246, in which the blades are fixed at their ends to the rotation shaft at angularly offset positions, in a manner so as to obtain a substantially helical longitudinal extension. The section of the wing profile is maintained constant along the entire extension of the blade. In this manner, the blades are always subjected at at least one longitudinal section thereof, and at any angular positioned assumed by the blade, to a useful action by the fluid-dynamic forces produced by the wind.

The aforesaid turbine, however, has not allowed improving the efficiency of transformation of the wind energy into rotational mechanical energy of the turbine.

In order to improve the performance of the turbine Darrieus it is known, from the patent GB 2404227, to obtain a turbine of such type with vertical axis, wherein the section of the wing profile of the blades has a chord which is extended in the shape of an arc and which is extended along a section of the rotation circumference around the axis of the turbine shaft. The single blades also have a longitudinal extension with helical form, as provided in the abovementioned US 5,405,246 patent.

An important characteristic for representing the shape of the wing profile of the blade is provided in a known manner by the s/c ratio between the thickness and the chord of the wing profile, i.e. by the ratio between the maximum distance that lies between the back and the front of the wing profile and the length of the line that joints the leading edge with the trailing edge of the wing profile. The wing profile of the blade described in the patent GB 2404227 is marked by a s/c ratio which preferably is greater at the ends of the blade.

In practice, it has been observed that the shape of the blades described in the patent GB 2404227 and in particular their wing profile does not ensure the attainment of high efficiency for the relative turbine.

Turbines of "Darrieus" type are also known in which the blades are longitudinally extended with a so-called troposkein geometry, corresponding with the shape that a chord in rotation assumes when fixed at the ends.

Different studies have been conducted on vertical axis wind turbines with troposkein form, for the purpose of optimizing the efficiency of yield of the wind energy into mechanical and electrical energy. Such studies have been usually based on empirical experiments through the execution of aerodynamic tests, both in wind tunnel and in open field, i.e. by referred to standardized types of wing profiles, such as NACA or SANDIA type, maintained in a nearly constant manner for the entire longitudinal extension of the blades.

The configurations of the blades of the turbines of the abovementioned known type do not in a sufficiently appropriate manner account for the variation of the distance of the wing profile from the rotation axis along the longitudinal extension of the blade. Consequently, the wing profile of the currently known blades does not vary in a continuous manner and with an optimized function along the extension of the blade in order to account for the effect of the distance from the rotation shaft as well as for the impact with the incident air flow.

Document GB-A-2451670 discloses a turbine and a blade according to the preamble of claims 1 and 10.

Presentation of the invention

In this situation, the problem underlying the present invention is to remedy the drawbacks manifested by the solutions of known type described above, by providing a vertical axis wind turbine and a blade for a vertical axis wind turbine provided with at least two blades, which allow improving the aerodynamic performance of the same blade, thus allowing the generation of a greater quantity of mechanical and hence electrical energy.

Another object of the present finding is to provide a vertical axis wind turbine and a blade for vertical axis wind turbine, which produce reduced noise.

Another object of the present finding is to provide a vertical axis wind turbine and a blade for vertical axis wind turbine, which produce limited vibrations.

Another object of the present finding is to provide a vertical axis wind turbine which is entirely safe to use.

Another object of the present finding is to provide a vertical axis wind turbine which is simple and inexpensive to make and entirely reliable in operation.

Brief description of the drawings

These objects and still others are all achieved by the turbine and by the blade, object of the present invention, whose technical characteristics can be clearly found in the contents of the below-reported claims and the advantages thereof will be clearer in the following detailed description, made with reference to the enclosed drawings, which represent a merely exemplifying and non-limiting embodiment of the invention, in which:

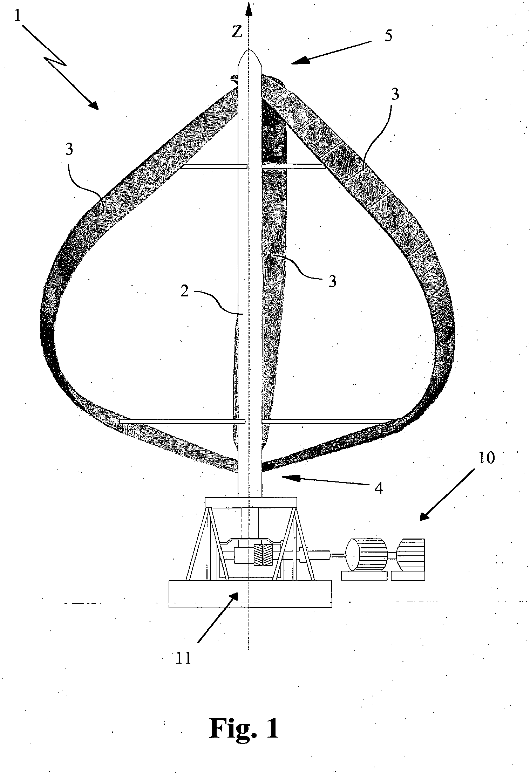

- Figure 1 shows a schematic view of an embodiment of the vertical axis wind turbine object of the present invention, provided with three blades that also form the object of the present invention;
- Figure 2 shows a front view of a blade of the wind turbine of Fig. 1;
- Figure 3 shows a side view of a blade of the wind turbine of Fig. 1;
- Figures 4A, 4B, 4C and 4D show the wing profile of the blade of Fig. 3 at four sections indicated with A-A, B-B, C-C and D-D in figure 3;
- Figure 5 shows a graph that is qualitatively representative of the evolution of the chord of the wing profile of a blade of the turbine (x axis), object of the present invention, as a function of the height of the generic wing profile of the blade starting from its base (y axis);
- Figure 6 shows a graph that is qualitatively representative of the evolution of the thickness/chord ratio of the wing profile of the blade (x axis) as a function of the height of the generic wing profile of the blade starting from its base (y axis);
- Table 1 shows the evolution of the values of the ratio $c/c_{max}$ i.e. of the value of the chord normalized with respect to its maximum value, of the wing profile of the blade as a function of the height h of the same wing profile, and it also shows the evolution of the s/c ratio, i.e. of the ratio between the thickness and the chord, of the wing profile of the blade as a function of the height h of the same wing profile adapted to confer the maximum aerodynamic efficiency of the blade;

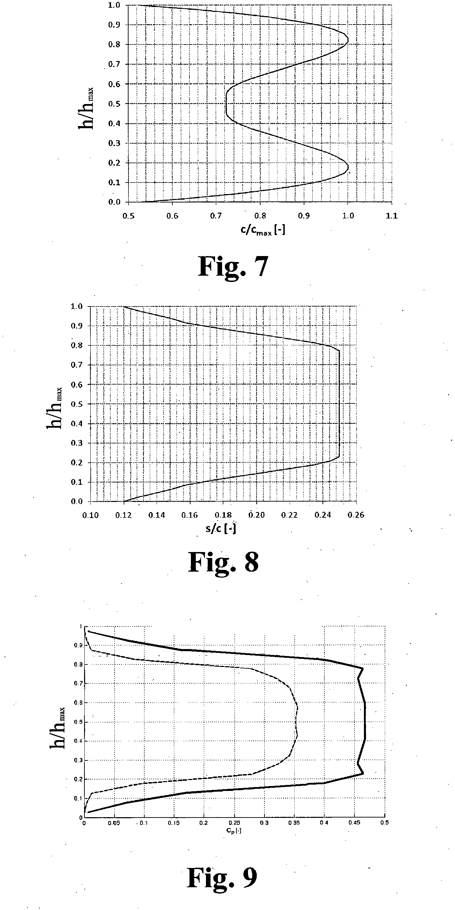

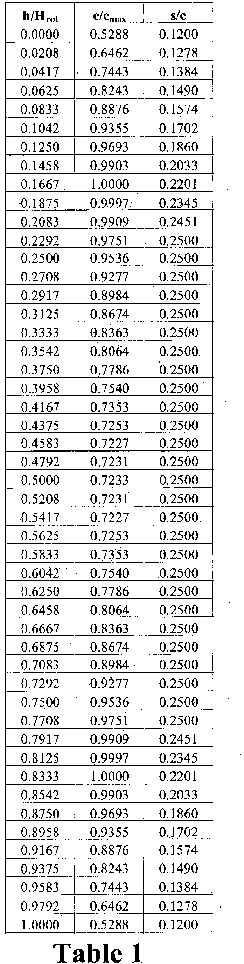

- Figure 7 shows a graph representative of the evolution of the chord of the wing profile of a blade of the turbine (x axis), object of the present invention, as a function of the height of the generic wing profile of the blade starting from its base (y axis) for the configuration of maximum efficiency of the rotor according to the data of Table 1;
- Figure 8 shows a graph representative of the evolution of the of the thickness/chord ratio of the wing profile of the blade (x axis) as a function of the height of the generic wing profile of the blade starting from its base (y axis) for the configuration of maximum efficiency of the rotor, according to the data of Table 1;
- Figure 9 shows a graph representative of the comparison between the local power coefficients (numerically estimated by means of the BE-M code) as a function of the height of the generic wing profile from the base of the blade of a turbine of known type (dashed line) and of a turbine of equal swept area having the characteristics of the present invention (solid line), for an undisturbed wind speed equal to 9 m/s.

## Detailed description of a preferred embodiment

With reference to the set of drawings, a preferred vertical axis wind turbine embodiment in accordance with the present invention has been indicated in its entirety with the reference number 1.

Such turbine 1 is of "Darrieus" type, i.e. comprising a rotor formed by a central rotation shaft 2 with vertical axis Z and by two or more blades 3, each provided with an elongated extension from a lower end 4 to an upper end 5, at which it is mechanically coupled to the shaft 2 in order to rotate it around its vertical axis Z.

The turbine 1, if it is adapted for the production of electrical energy, can in an entirely conventional manner comprise means for converting the mechanical energy of the shaft 2 into electrical energy, such as a generator 10 possibly mechanically connected to the shaft by means of a reducer 11.

Each blade 3 is substantially rigid and defines, between its two ends 4 and 5, an arc with concavity directed towards the vertical axis Z.

The shape of such arc is advantageously marked by a geometry in the technical jargon of the field denominated by the term "troposkein", and corresponding to the shape that a chord in rotation assumes when fixed at the ends.

Hereinbelow in the description and claims, with such term "troposkein" it is intended an arc-shaped geometric form, even only comparable to the troposkein geometric function, such as a simplified form obtained with an arc of a circle, i.e. with a central arc of a circle continued at the ends by two rectilinear sections, or obtained with arched curves with progression similar to the troposkein geometry, such as a "catenary".

Each blade 3 is of the type provided with a section defining a wing profile P, i.e. a profile that is susceptible of producing a lift component aimed to drive the central shaft 2 fixed thereto in rotation, when it is immersed in an air flow.

The principle that rotates the turbine 1 due to the fluid-dynamic forces acting on the wing profile of the blade 3 are well known to the man skilled in the art and for this reason are not discussed in detail herein.

The fluid-dynamic characteristics of the blade are affected, as is known, by the form of its wing profile.

In a *per se* known manner, the wing profile P is conditioned by an important parameter constituted by the s/c ratio between the thickness s and the chord c of the wing profile, i.e. by the ratio between the maximum distance that lies between the back D and the front V of the wing profile P and the length of the line that joins the leading edge Ba with the trailing edge Bu of the wing profile P.

According to the idea underlying the present invention, the wing profile P of each blade 3 of the turbine 1 is marked by the progression of its chord c as a function of the height h of the wing profile of the blade 3 as well as by the progression of the s/c ratio between its thickness s and its chord c as a function of the height h of the wing profile of the blade 3 as specified hereinbelow.

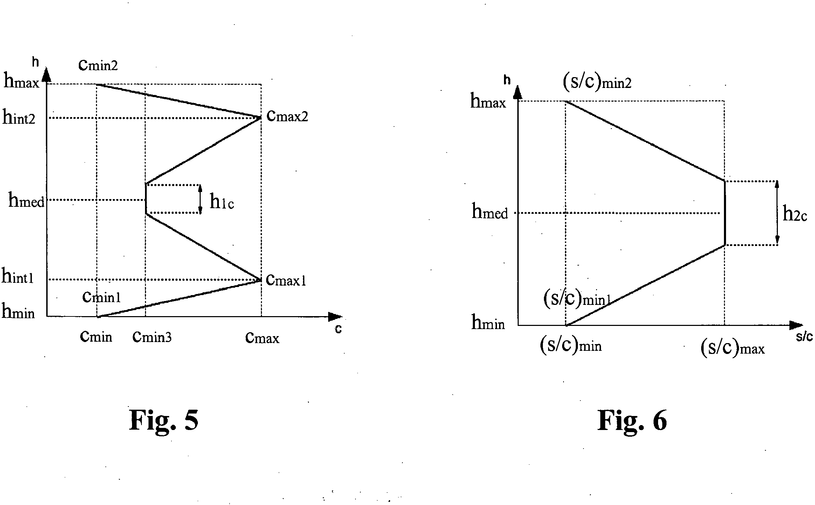

The progression of the chord c as a function of the height h of the wing profile of the blade 3 according to the invention, as indicated in the qualitative graph of Figure 5, provides for the presence of two first minimum chord values, indicated in the graph with the references $c_{min1}$ and $c_{min2}$ (preferably coinciding in a single value $c_{min}$) respectively arranged at the aforesaid lower 4 and upper 5 ends of the height of the blade 3 indicated with $h_{min}$ and $h_{max}$ in the graph of Figure 5 arranged at the base and at the top of the rotor.

Such progression also provides for a second minimum chord value $c_{min3}$ arranged substantially at the median value $h_{med}$ of the height of the blade 3 and a first and a second maximum chord value, indicated in the graph of Figure 5 with the references $c_{max1}$ and $c_{max2}$ (preferably coinciding in a single value $c_{max}$) respectively arranged at two inter-mediate heights $h_{int1}$ and $h_{int2}$ of the wing profile P of the blade 3 interposed between the median value $h_{med}$ of the height of the blade 3 and the maximum and minimum heights of the blade $h_{min}$ and $h_{max}$, respectively, i.e. of the aforesaid lower 4 and upper 5 ends of the blade 3.

The progression of the s/c ratio between the thickness s and the chord c of the wing profile P as a function of the height h of the wing profile of the blade 3 provides for the presence of a first and a second minimum ratio value, indicated in the graph of Figure 6 with the references $(s/c)_{min1}$ and $(s/c)_{min2}$ (preferably coinciding in a single value $(s/c)_{min}$), respectively at the aforesaid lower 4 and upper 5 ends of the height $h_{min}$ and $h_{max}$ of the blade 3, as well as a maximum ratio value $(s/c)_{max}$ substantially at the aforesaid median value $h_{med}$ of the height of the wing profile of the blade 3. Advantageously, in accordance with the preferred embodiment of the enclosed figures and in particular in accordance with the graphs of figures 5 and 6 the aforesaid first minimum chord values $c_{min1}$ and $c_{min2}$ coincide in a single value $c_{min}$, just like the first and the second maximum chord value $c_{max1}$, $c_{max2}$ coincide in a single value $c_{max}$ and just like the aforesaid first and second minimum ratio values $(s/c)_{min1}$, $(s/c)_{min2}$ also coincide in a single value $(s/c)_{min}$.

The progression of the chord c of the wing profile P and the progression of the s/c ratio between the thickness s and the chord c of the wing profile P as a function of the height h of the wing profile P of the blade 3 are therefore advantageously symmetrical with respect to the median value $h_{med}$ of the height of the blade 3.

More in particular, the wing profile P of the blade 3 is symmetrically extended along the longitudinal extension direction of the blade 3 with respect to a median horizontal plane that divides the blade 3 starting from the median height $h_{med}$ into its lower part and its upper part, both converging towards the central part arranged at the greatest distance from the rotation axis Z, wherein the wing profile P has, as can be inferred from the progression of the graphs 5 and 6, a chord c with reduced size and a s/c ratio with maximum value i.e. with a greater convexity.

Therefore, advantageously, the geometry of the blade 3 of the rotor of the turbine, object of the present invention, has a chord c of the wing profile that is extended with:

- a common minimum value $c_{min}$ at the ends 4, 5 of the blade 3 (i.e. of the base and top of the rotor);
- a maximum value $c_{max}$ at two intermediate positions, one arranged between the top 5 and the median height $h_{med}$ of the blade 3, the other between the base 4 and the median height $h_{med}$ of the blade,
- a reduced value at the median height $h_{med}$ of the blade 3, according to the qualitative progression schematized in Figure 5 for the exemplifying but not limiting case of linear evolution of the progression of the chord c as a function of the height h of the wing profile P of the blade 3.

It has been found that minimum values of the chord c at the base 4 and at the upper end 5 of the blade 3 determine a reduction of the aerodynamic resistance of the blade 3 itself in positions which in any case would generate low power given their vicinity to the rotation axis.

Moving progressively towards the intermediate positions between the base and the median position $h_{med}$ of the height of the blade 3, as well as between the top and the median position of the blade 3, the increase of the value of the chord c allows more greatly loading the wing profile from the aerodynamic standpoint in positions of the blade marked by a lever arm with respect to the rotation axis Z that is steadily increased and therefore with respect to positions of the wing profile susceptible of generating increasing power, thus obtaining a greater performance of the blade 3.

The reduction of the chord c at the median height $h_{med}$ of the blade 3 has proven capable of allowing the blade to interfere in a less invasive manner on the current of the air flow, generating less vortices and less turbulence otherwise susceptible of worsening the aerodynamic performance of the blade. The reduction of the chord c at the median height $h_{med}$ of the blade 3 involves a reduction of the slowing of the air flow current that would instead take place if the chord c continued to increase or if the chord remained constant (as in the blades of known type) due to the increased aerodynamic blocking that blade sections arranged in the middle $h_{med}$ of the blade 3 would induce, and with chord with non-reduced size.

The reduction of the chord c at the median height $h_{med}$ of the blade 3 allows maintaining an increased speed of the wind that traverses the rotor, without overly negatively affecting the fluid-dynamic thrust of the wind on the blade and finally leads to a substantial increase of the overall power generated by the blade, given that such power is proportional to the cube of the wind speed, so that a smaller aerodynamic block of the flow into the central part has a positive effect on the power transmitted to the blade 3. At the same time as the chord c progression, the thickness/chord ratio s/c of the blade section assumes the progression qualitatively represented in Figure 6 in accordance with the exemplifying but not exhaustive case of a linear evolution.

Due to the increase of the s/c ratio at the median height $h_{med}$ of the blade 3, the best stall properties of the wing profile P are obtained. In addition, the lower value of the s/c ratio towards the base and the top of the blade determines a reduction of the aerodynamic resistance of the blade 3 itself in positions that would in any case generate low power, given that they are close to the rotation axis and thus marked by a reduced arm.

The synergistic combination of the two graphs of the wing profile P of the blade 3 determines a reduction of the chord c and a simultaneous increase of the convexity of the wing profile P at the midpoint $h_{med}$ of the blade 3; when these characteristics are synergistically combined, they have proven capable of producing significant improvements of the aerodynamic performance of the blade 3, due to a surprising optimization achieved of the exploitation of the air flow with which the blade interferes, without however blocking the flow or excessively modifying it in the central part of the blade 3 which hits the wind with greater relative speed and which - being marked by a greater arm with respect to the rotation axis Z of the blade 3 - can bring a greater contribution to the rotational power supplied to the rotor of the turbine 1.

Figure 12 illustrates the results of a numeric simulation based on the known method BE-M (Blade Element - Momentum described for example in the article M. Raciti Castelli, A. Fedrigo, E. Benini, Effect of Dynamic Stall, Finite Aspect Ratio and Streamtube Expansion on VAWT Performance Prediction using the BE-M Model, International Journal of Mechanical and Aerospace Engineering, Issue 6 - 2012, pp. 468-480; enclosed herein for reference purposes) where the aerodynamic efficiencies of the known rotor indicated by Sheldahl (described in the article R. E. Sheldahl, Comparison of Field and Wind Tunnel Darrieus Wind Turbine Data, SAND80-246 enclosed herein for reference purposes) were compared with those of a rotor of equal swept area having blades with the characteristics of the present invention. In particular, the figure reports the progression of the local power coefficient (x axis), defined by:

$$Cp = P / (½ \, \rho \, A \, V^3)$$

given that:

- P is the mechanical power at the axis of the rotor;
- p is the density of the air;
- A is the swept area of the horizontal strip as a function of the height so that the performances of the rotor are calculated each time;
- V is the undisturbed wind speed upstream of the rotor,

as a function of the height with respect to the base of the rotor, made dimensionless with respect to the overall height of the blade ($h/h_{max}$). The greater efficiency obtained by means of the present invention is clearly visible.

In accordance with a preferred embodiment of the present invention, the second minimum chord value $c_{min3}$ of the wing profile P of said blade 3 is substantially constant for a first central section $h_{1c}$ of the height of the wing profile P of the blade 3. The aforesaid first central section $h_{1c}$ preferably has an extension less than 50% of the height $h_{max}$ of the blade 3.

In addition, preferably also the value of the maximum ratio $(s/c)_{max}$ of the wing profile P of the blade 3 is maintained substantially constant for a second central section $h_{2c}$ of the height of the wing profile P of the blade 3, which preferably has an extension less than 60% of the height $h_{max}$ of the blade 3.

In particular, it has been found that the turbine 1, object of the present invention, is susceptible to expressing its maximum efficiency with values of the ratio $c/c_{max}$ of the wing profile P of the blade 3 as a function of the height h of the wing profile P, as well as with values of the s/c ratio of the wing profile P of the blade 3 as a function of the height h of the wing profile which evolve with a progression represented in the enclosed Table 1, i.e. in the graphs of the corresponding figures 7 and 8 whose curves are extrapolated from the values of the aforesaid Table 1.

Variations of the ratio $c/c_{max}$ and of the s/c ratio of the wing profile P of the blade 3 less than $\pm 10\%$ with respect to the values determined from the proposed table do not negatively affect the performances of the rotor and are to be considered as comprised within the scope of the present invention.

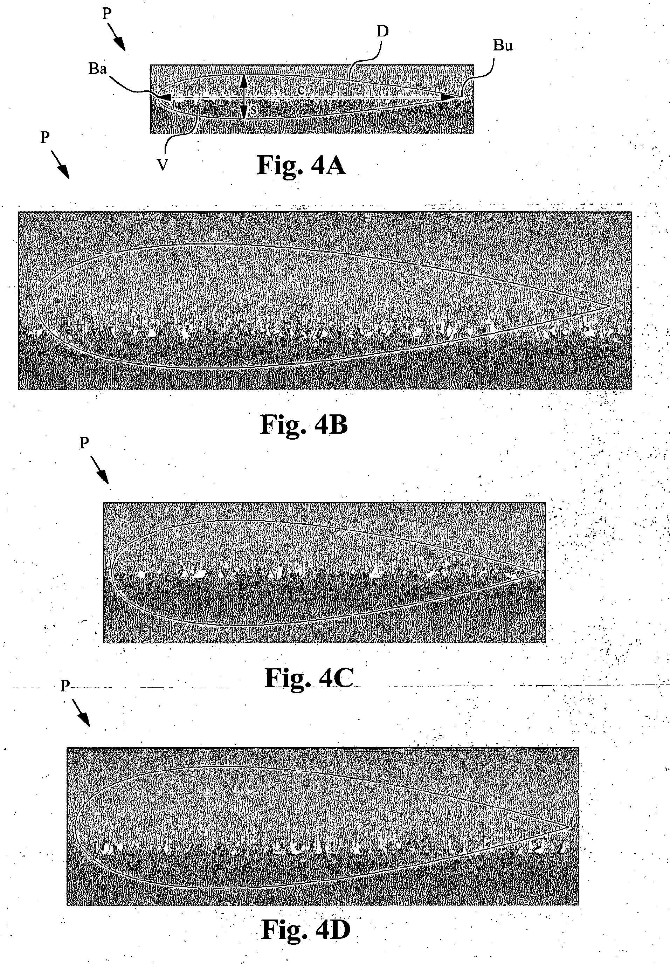

Figures 4A, 4B, 4C and 4D illustrate a qualitative embodiment of the above-described progression of the wing profile P of the blade 3 as a function of the height h of the generic wing profile of the blade 3 with respect to the base 4 of the blade 3.

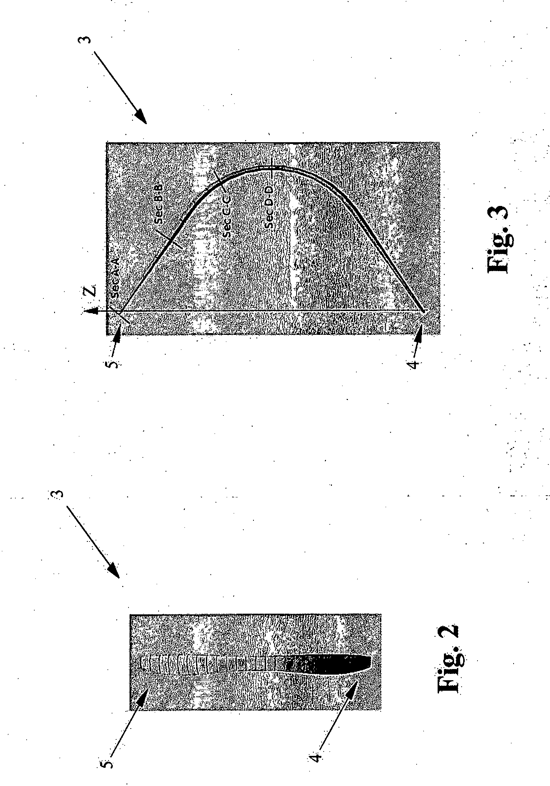

More in detail, figure 3 illustrates the positions of the sections of the blade 3 which generate the wing profiles P of the subsequent Figures 4A, 4B, 4C and 4D and which are respectively arranged at the height from the lower end 4 of the blade 3, as is specified hereinbelow: Section A-A: $h/h_{max}$ = 1.0000; Section B-B: $h/h_{max}$ = 0.8333; Section C-C: $h/h_{max}$ = 0.6667; Section D-D: $h/h_{max}$ = 0.5000.

Figure 4A illustrates the wing profile P of the blade along the section A-A orthogonal to the axis of the blade itself and positioned with $h/h_{max}$ = 1.0000; $c/c_{max}$ = 0.5288; s/c = 0.1200.

Figure 4B illustrates the wing profile P of the blade along the section B-B orthogonal to the axis of the blade itself and positioned with $h/h_{max}$ = 0.8333; $c/c_{max}$ = 1.0000; s/c = 0.2201.

Figure 4C illustrates the wing profile P of the blade along the section C-C orthogonal to the axis of the blade itself and positioned with $h/h_{max}$ = 0.6667; $c/c_{max}$ = 0.8363; s/c = 0.2500.

Figure 4D illustrates the wing profile P of the blade along the section C-C orthogonal to the axis of the blade itself and positioned with $h/h_{max}$ = 0.5000; $c/c_{max}$ = 0.7233; s/c = 0.2500.

The finding thus conceived therefore achieves the pre-established objects. Of course, in the practical achievement thereof, it can also assume shapes and configurations different from that illustrated above, without departing from the present protective scope.

In addition, all of the details can be substituted by technically equivalent elements and the shapes, size and materials used can be of any type as required.

**Claims**

1. Vertical axis wind turbine, which comprises:

   - a central rotation shaft (2) having a vertical axis (Z);
   - two or more blades (3), each of which provided with wing profile (P) and with an elongated length that is substantially extended as an arc with concavity directed towards said central rotation shaft (2), from a lower end (4) to an upper end (5), at which said blade (3) is mechanically coupled to said central rotation shaft (2) in order to transmit a rotation motion around the aforesaid vertical axis (Z);

   wherein the wing profile (P) of each said blade (3) is marked by:

   - a progression of its chord (c) as a function of the height (h) of the wing profile (P) of said blade (3) having:

      - two first minimum chord values ($c_{min1}$, $c_{min2}$) respectively at the aforesaid upper and lower ends ($h_{max}$, $h_{min}$) of the height of said blade (3);
      - a second minimum chord value ($c_{min3}$) at a median value ($h_{med}$) of the height of said blade (3) and
      - and a first and a second maximum chord value ($c_{max1}$, $c_{max2}$) respectively at two intermediate heights ($h_{int1}$ and $h_{int2}$) of the wing profile (P) of said blade (3) interposed between the median value ($h_{med}$) of the height of said blade (3) and the heights ($h_{min}$, $h_{max}$) of the aforesaid lower (4) and upper (5) ends of said blade (3), respectively; the wing profile being **characterised by**:

   - a progression of the ratio (s/c) between its thickness (s) and its chord (c) as a function of the height (h) of the wing profile (P) of said blade (3) having:

      - a first and a second minimum ratio value ($(s/c)_{min1}$; $(s/c)_{min2}$) respectively at the aforesaid lower and upper ends ($h_{min}$, $h_{max}$) of the height of said blade (3);
      - a maximum ratio value ($(s/c)_{max}$) at a median value ($h_{med}$) of the height of said blade (3).

2. Vertical axis wind turbine according to claim 1, **characterized in that** said second minimum chord value ($c_{min3}$) of the wing profile (P) of said blade (3) is substantially constant for a first central section ($h_{1c}$) of the height of the wing profile (P) of said blade (3) with extension less than 50% of the height of said blade (3).

3. Vertical axis wind turbine according to any one of the preceding claims, **characterized in that** said maximum ratio value ($(s/c)_{max}$) of the wing profile (P) of said blade (3) is substantially constant for a second central section ($h_{2c}$) of the height of the wing profile (P) of said blade (3) with extension less than 60% of the height of said blade (3).

4. Vertical axis wind turbine according to any one of the preceding claims, **characterized in that** the elongated length of said blade has progression with substantially troposkein geometry.

5. Vertical axis wind turbine according to any one of the preceding claims, **characterized in that** said two first minimum chord values ($c_{min1}$, $c_{min2}$) coincide.

6. Vertical axis wind turbine according to any one of the preceding claims, **characterized in that** said first and second maximum chord values ($c_{max1}$, $c_{max2}$) coincide.

7. Vertical axis wind turbine according to any one of the preceding claims, **characterized in that** said first and second minimum ratio values ($(s/c)_{min1}$, $(s/c)_{min2}$) coincide.

8. Vertical axis wind turbine according to any one of the preceding claims, **characterized in that** the chord (c) progression of the wing profile (P) as a function of the height (h) of the wing profile (P) of said blade (3) is symmetrical with respect to the median value ($h_{med}$) of the height of said blade (3), and the progression of the ratio (s/c) between the thickness (s) and the chord (c) of the wing profile (P) as a function of the height (h) of the wing profile (P) of said blade (3) is symmetrical with respect to the median value ($h_{med}$) of the height of said blade (3).

9. Vertical axis wind turbine according to any one of the preceding claims, **characterized in that** the values of the chord (c) progression normalized with respect to its maximum value ($c_{max}$), as a function of the height (h) of said blade (3) normalized with respect to the value of the height ($h_{max}$) of the blade (3), as well as of the progression of the ratio (s/c) between the thickness (s) and the chord (c) as a function of the height (h) of said blade (3) normalized with respect to the value of the height ($h_{max}$) of the blade (3), are equal to the values of the following table $\pm$ 10%:

| $h/h_{max}$ | $c/c_{max}$ | s/c | | | | | | |
|---|---|---|---|---|---|---|---|---|
| 0.0000 | 0.5288 | 0.1200 | 0.3333 | 0.8363 | 0.2500 | 0.6875 | 0.8674 | 0.2500 |
| 0.0208 | 0.6462 | 0.1278 | 0.3542 | 0.8064 | 0.2500 | 0.7083 | 0.8984 | 0.2500 |
| 0.0417 | 0.7443 | 0.1384 | 0.3750 | 0.7786 | 0.2500 | 0.7292 | 0.9277 | 0.2500 |
| 0.0625 | 0.8243 | 0.1490 | 0.3958 | 0.7540 | 0.2500 | 0.7500 | 0.9536 | 0.2500 |
| 0.0833 | 0.8876 | 0.1574 | 0.4167 | 0.7353 | 0.2500 | 0.7708 | 0.9751 | 0.2500 |
| 0.1042 | 0.9355 | 0.1702 | 0.4375 | 0.7253 | 0.2500 | 0.7917 | 0.9909 | 0.2451 |
| 0.1250 | 0.9693 | 0.1860 | 0.4583 | 0.7227 | 0.2500 | 0.8125 | 0.9997 | 0.2345 |
| 0.1458 | 0.9903 | 0.2033 | 0.4792 | 0.7231 | 0.2500 | 0.8333 | 1.0000 | 0.2201 |
| 0.1667 | 1.0000 | 0.2201 | 0.5000 | 0.7233 | 0.2500 | 0.8542 | 0.9903 | 0.2033 |
| 0.1875 | 0.9997 | 0.2345 | 0.5208 | 0.7231 | 0.2500 | 0.8750 | 0.9693 | 0.1860 |
| 0.2083 | 0.9909 | 0.2451 | 0.5417 | 0.7227 | 0.2500 | 0.8958 | 0.9355 | 0.1702 |
| 0.2292 | 0.9751 | 0.2500 | 0.5625 | 0.7253 | 0.2500 | 0.9167 | 0.8876 | 0.1574 |
| 0.2500 | 0.9536 | 0.2500 | 0.5833 | 0.7353 | 0.2500 | 0.9375 | 0.8243 | 0.1490 |
| 0.2708 | 0.9277 | 0.2500 | 0.6042 | 0.7540 | 0.2500 | 0.9583 | 0.7443 | 0.1384 |
| 0.2917 | 0.8984 | 0.2500 | 0.6250 | 0.7786 | 0.2500 | 0.9792 | 0.6462 | 0.1278 |
| 0.3125 | 0.8674 | 0.2500 | 0.6458 | 0.8064 | 0.2500 | 1.0000 | 0.5288 | 0.1200 |
| | | | 0.6667 | 0.8363 | 0.2500 | | | |

10. Blade for vertical axis wind turbine according to any one of the preceding claims, **characterized in that** it provides for a wing profile (P) marked by:

- a progression of its chord (c) as a function of the height (h) of the wing profile (P) of said blade (3) having:

- two first minimum chord values ($c_{min1}$, $c_{min2}$) respectively at the aforesaid upper and lower ends ($h_{max}$, $h_{min}$) of the height of said blade (3);
- a second minimum chord value ($c_{min3}$) at a median value ($h_{med}$) of the height of said blade (3) and
- and a first and a second maximum chord value ($c_{max1}$, $c_{max2}$) respectively at two intermediate heights ($h_{int1}$ and $h_{int2}$) of the wing profile (P) of said blade (3) interposed between the median value ($h_{med}$) of the height of said blade (3) and the heights ($h_{min}$, $h_{max}$) of the aforesaid lower (4) and upper (5) ends of said blade (3), respectively; the blade being **characterised by** a wing profile with:

- a progression of the ratio (s/c) between its thickness (s) and its chord (c) as a function of the height (h) of the wing profile (P) of said blade (3) having:

- a first and a second minimum ratio value (($s/c)_{min1}$, ($s/c)_{min2}$) respectively at the aforesaid lower and upper ends ($h_{min}$, $h_{max}$) of the height of said blade (3);
- a maximum ratio value (($s/c)_{max}$) at a median value ($h_{med}$) of the height of said blade (3).

**Patentansprüche**

1. Windturbine mit vertikaler Achse, die Folgendes umfasst:

- eine zentrale Drehwelle (2) mit einer vertikalen Achse (Z);
- zwei oder mehr Schaufeln (3), von denen jede mit einem Flügelprofil (P) versehen ist und einen länglichen, im Wesentlichen bogenförmigen Verlauf mit Wölbung zu der genannten zentralen Drehwelle (2) von einem unteren Ende (4) zu einem oberen Ende (5) aufweist, auf denen die genannte Schaufel (3) mechanisch mit der genannten zentralen Drehwelle (2) gekoppelt ist, um eine Drehbewegung um die oben genannte vertikale Achse (Z) zu übertragen;

bei der das Flügelprofil (P) jeder genannten Schaufel (3) durch Folgendes gekennzeichnet ist:

- einen Verlauf seiner Schnur (c) abhängig von der Höhe (h) des Flügelprofils (P) der genannten Schaufel (3) mit:

    - zwei erste Mindestschnurwerten ($c_{min1}$, $c_{min2}$) jeweils auf dem oben genannten oberen und unteren Ende ($h_{max}$, $h_{min}$) der Höhe der genannten Schaufel (3);
    - einen zweiten Mindestschnurwert ($c_{min3}$) auf einem Medianwert ($h_{med}$) der Höhe der genannten Schaufel (3) und
    - einen ersten und zweiten Mindestschnurwert ($c_{max1}$, $c_{max2}$) jeweils auf den beiden Zwischenhöhen ($h_{int1}$, und $h_{int2}$) des Flügelprofils (P) der genannten Schaufel (3) zwischen dem Medianwert ($h_{med}$) der Höhe der genannten Schaufel (3) und jeweils den Höhen ($h_{min}$, $h_{max}$) des oben genannten unteren (4) und oberen Endes (5) der genannten Schaufel (3); wobei das Flügelprofil durch Folgendes gekennzeichnet ist:

- einen Verlauf des Verhältnisses (s/c) zwischen seiner Stärke (s) und seiner Schnur (c) abhängig von der Höhe (h) des Flügelprofils (P) der genannten Schaufel (3), das Folgendes aufweist:

    - einen ersten und einen zweiten Mindestverhältniswert ($c_{min1}$, $c_{min2}$) jeweils auf dem oben genannten oberen und unteren Ende ($h_{max}$, $h_{min}$) der Höhe der genannten Schaufel (3);
    - einen maximalen Verhältniswert ($s/c_{max}$) auf einem Medianwert ($h_{med}$) der Höhe der genannten Schaufel (3).

2. Windturbine mit vertikaler Achse nach Anspruch 1, **dadurch gekennzeichnet, dass** der genannte zweite Mindestschnurwert ($c_{min3}$) des Flügelprofils (P) der genannten Schaufel (3) auf einem ersten zentralen Abschnitt ($h_{1c}$) der Höhe des Flügelprofils (P) der genannten Schaufel (3) mit einer Länge von weniger als 50 % der Höhe der genannten Schaufel (3) konstant verläuft.

3. Windturbine mit vertikaler Achse nach einem beliebigen der vorangegangenen Ansprüche, **dadurch gekennzeichnet, dass** der genannte maximale Verhältniswert ($s/c_{max}$) des Flügelprofils (P) der genannten Schaufel (3) auf einem zweiten zentralen Abschnitt ($h_{2c}$) der Höhe des Flügelprofils (P) der genannten Schaufel (3) mit einer Länge von weniger als 60 % der Höhe der genannten Schaufel (3) konstant verläuft.

4. Windturbine mit vertikaler Achse nach einem beliebigen der vorangegangenen Ansprüche, **dadurch gekennzeichnet, dass** der Längsverlauf der genannten Schaufel im Wesentlichen eine Troposkien-Geometrie aufweist.

5. Windturbine mit vertikaler Achse nach einem beliebigen der vorangegangenen Ansprüche, **dadurch gekennzeichnet, dass** die genannten beiden ersten Mindestschnurwerte ($c_{min1}$, $c_{min2}$) übereinstimmen.

6. Windturbine mit vertikaler Achse nach einem beliebigen der vorangegangenen Ansprüche, **dadurch gekennzeichnet, dass** die genannten beiden ersten und zweiten maximalen Schnurwerte ($c_{max1}$, $c_{max2}$) übereinstimmen.

7. Windturbine mit vertikaler Achse nach einem beliebigen der vorangegangenen Ansprüche, **dadurch gekennzeichnet, dass** die genannten beiden ersten und zweiten Mindestverhältniswerte ($c_{max1}$, $c_{max2}$) übereinstimmen.

8. Windturbine mit vertikaler Achse nach einem beliebigen der vorangegangenen Ansprüche, **dadurch gekennzeichnet, dass** der Verlauf der Schnur (c) des Flügelprofils (P) abhängig von der Höhe (h) des Flügelprofils (P) der genannten Schaufel (3) im Verhältnis zum Medianwert ($h_{med}$) der Höhe der genannten Schaufel (3) symmetrisch ist und der Verlauf des Verhältnisses (s/c) zwischen der Stärke (s) und der Schnur (c) des Flügelprofils (P) abhängig von der Höhe (h) des Flügelprofils (P) der genannten Schaufel (3) im Verhältnis zum Medianwert ($h_{med}$) der Höhe der genannten Schaufel (3) symmetrisch ist.

9. Windturbine mit vertikaler Achse nach einem beliebigen der vorangegangenen Ansprüche, **dadurch gekennzeichnet, dass** die Werte des durch seinen Höchstwert geteilten Verlaufs der Schnur ($c_{max}$) abhängig von Höhe (h) der genannten Schaufel (3) geteilt durch den Höchstwert ($h_{max}$) der Schaufel (3) sowie des Verlaufs des Verhältnisses (s/c) zwischen der Stärke (s) und der Schnur (c) abhängig von der Höhe (h) der genannten Schaufel (3) geteilt durch

den Höhenwert ($h_{max}$) der Schaufel (3) mit den Werten in der folgenden Tabelle mit einer Abweichung von ± 10 % übereinstimmen.

| h/$h_{max}$ | c/$c_{max}$ | s/c | | | | | | |
|---|---|---|---|---|---|---|---|---|
| 0.0000 | 0.5288 | 0.1200 | 0.4792 | 0.7231 | 0.2500 | 0.9792 | 0.6462 | 0.1278 |
| 0.0208 | 0.6462 | 0.1278 | 0.5000 | 0.7233 | 0.2500 | 1.0000 | 0.5288 | 0.1200 |
| 0.0417 | 0.7443 | 0.1384 | 0.5208 | 0.7231 | 0.2500 | | | |
| 0.0625 | 0.8243 | 0.1490 | 0.5417 | 0.7227 | 0.2500 | | | |
| 0.0833 | 0.8876 | 0.1574 | 0.5625 | 0.7253 | 0.2500 | | | |
| 0.1042 | 0.9355 | 0.1702 | 0.5833 | 0.7353 | 0.2500 | | | |
| 0.1250 | 0.9693 | 0.1860 | 0.6042 | 0.7540 | 0.2500 | | | |
| 0.1458 | 0.9903 | 0.2033 | 0.6250 | 0.7786 | 0.2500 | | | |
| 0.1667 | 1.0000 | 0.2201 | 0.6458 | 0.8064 | 0.2500 | | | |
| 0.1875 | 0.9997 | 0.2345 | 0.6667 | 0.8363 | 0.2500 | | | |
| 0.2083 | 0.9909 | 0.2451 | 0.6875 | 0.8674 | 0.2500 | | | |
| 0.2292 | 0.9751 | 0.2500 | 0.7083 | 0.8984 | 0.2500 | | | |
| 0.2500 | 0.9536 | 0.2500 | 0.7292 | 0.9277 | 0.2500 | | | |
| 0.2708 | 0.9277 | 0.2500 | 0.7500 | 0.9536 | 0.2500 | | | |
| 0.2917 | 0.8984 | 0.2500 | 0.7708 | 0.9751 | 0.2500 | | | |
| 0.3125 | 0.8674 | 0.2500 | 0.7917 | 0.9909 | 0.2451 | | | |
| 0.3333 | 0.8363 | 0.2500 | 0.8125 | 0.9997 | 0.2345 | | | |
| 0.3542 | 0.8064 | 0.2500 | 0.8333 | 1.0000 | 0.2201 | | | |
| 0.3750 | 0.7786 | 0.2500 | 0.8542 | 0.9903 | 0.2033 | | | |
| 0.3958 | 0.7540 | 0.2500 | 0.8750 | 0.9693 | 0.1860 | | | |
| 0.4167 | 0.7353 | 0.2500 | 0.8958 | 0.9355 | 0.1702 | | | |
| 0.4375 | 0.7253 | 0.2500 | 0.9167 | 0.8876 | 0.1574 | | | |
| 0.4583 | 0.7227 | 0.2500 | 0.9375 | 0.8243 | 0.1490 | | | |
| | | | 0.9583 | 0.7443 | 0.1384 | | | |

**10.** Schaufel für Windturbine mit vertikaler Achse nach einem beliebigen der vorangegangenen Ansprüche, **dadurch gekennzeichnet**, ein Flügelprofil (P) vorzusehen, das durch Folgendes gekennzeichnet ist:

- einen Verlauf seiner Schnur (c) abhängig von der Höhe (h) des Flügelprofils (P) der genannten Schaufel (3) mit:

- zwei ersten Mindestschnurwerten ($c_{min1}$, $c_{min2}$) jeweils auf dem oben genannten oberen und unteren Ende ($h_{max}$, $h_{min}$) der Höhe der genannten Schaufel (3);
- einem zweiten Mindestschnurwert ($c_{min3}$) auf einem Mittelwert ($h_{med}$) der Höhe der genannten Schaufel (3) und
- einem ersten und einem zweiten maximalen Schnurwert ($c_{max1}$, $c_{max2}$) jeweils auf den beiden Zwischen-höhen ($h_{int1}$ und $h_{int2}$) des Flügelprofils (P) der genannten Schaufel (3) zwischen dem Medianwert ($h_{med}$) der Höhe der genannten Schaufel (3) und jeweils den Höhen ($h_{min}$, $h_{max}$) des oben genannten unteren (4) und oberen Endes (5) der genannten Schaufel (3); wobei die Schaufel durch ein Flügelprofil gekennzeichnet ist, das Folgendes aufweist:

- einen Verlauf des Verhältnisses (s/c) zwischen seiner Stärke (s) und seiner Schnur (c) abhängig von der Höhe (h) des Flügelprofils (P) der genannten Schaufel (3) mit:

- einem ersten und einem zweiten Mindestverhältniswert ($c_{min1}$, $c_{min2}$) jeweils auf dem oben genannten oberen und unteren Ende ($h_{max}$, $h_{min}$) der Höhe der genannten Schaufel (3);
- einem maximalen Verhältniswert ($s/c_{max}$) auf einem Mittelwert ($h_{med}$) der Höhe der genannten Schaufel (3).

**Revendications**

1. Éolienne à axe vertical comprenant :

- un arbre central de rotation (2) ayant un axe vertical (Z) ;
- deux ou plusieurs pales (3), chacune desquelles est dotée d'un profil d'aile (P) et d'un développement allongé qui s'étend essentiellement en arc avec concavité tournée vers ledit arbre central de rotation (2), d'une extrémité inférieure (4) à une extrémité supérieure (5), au niveau desquelles ladite pale (3) est mécaniquement accouplée audit arbre central de rotation (2) pour lui transmettre un mouvement de rotation autour dudit axe vertical (Z) ;

dans laquelle le profil d'aile (P) de chacune desdites pales (3) est distingué par :

- une évolution de sa corde (c) en fonction de la hauteur (h) du profil d'aile (P) de ladite pale (3) ayant :

- deux premières valeurs de corde minimums ($c_{min1}$, $c_{min2}$) au niveau respectivement desdites extrémités supérieure et inférieure ($h_{max}$, $h_{min}$) de la hauteur de ladite pale (3) ;
- une deuxième valeur de corde minimum ($c_{min3}$) au niveau d'une valeur médiane ($h_{med}$) de la hauteur de ladite pale (3) et
- une première et une deuxième valeur de corde maximum ($c_{max1}$, $c_{max2}$) au niveau respectivement de deux hauteurs intermédiaires ($h_{int1}$ ed $h_{int2}$) du profil d'aile (P) de ladite pale (3) interposées entre la valeur médiane ($h_{med}$) de la hauteur de ladite pale (3) et respectivement les hauteurs ($h_{min}$, $h_{max}$) desdites extrémités inférieure (4) et supérieure (5) de ladite pale (3) ; le profil d'aile étant **caractérisé par** :

- une évolution du rapport (e/c) entre son épaisseur (e) et sa corde (c) en fonction de la hauteur (h) du profil d'aile (P) de ladite pale (3) ayant :

- une première et une deuxième valeur de rapport minimum ($(e/c)_{min1}$, $(e/c)_{min2}$) au niveau respectivement desdites extrémités inférieure et supérieure ($h_{min}$, $h_{max}$) de la hauteur de ladite pale (3) ;
- une valeur de rapport maximum ($(e/c)_{max}$) au niveau d'une valeur médiane ($h_{med}$) de la hauteur de ladite pale (3).

2. Éolienne à axe vertical selon la revendication 1, **caractérisée en ce que** ladite deuxième valeur de corde minimum ($c_{min3}$) du profil d'aile (P) de ladite pale (3) est essentiellement constante pour un premier tronçon central ($h_{1c}$) de la hauteur du profil d'aile (P) de ladite pale (3) d'extension inférieure à 50 % de la hauteur de ladite pale (3).

3. Éolienne à axe vertical selon une quelconque des revendications précédentes, **caractérisée en ce que** ladite valeur de rapport maximum ($(e/c)_{max}$) du profil d'aile (P) de ladite pale (3) est essentiellement constante pour un deuxième tronçon central ($h_{2c}$) de la hauteur du profil d'aile (P) de ladite pale (3) d'extension inférieure à 60 % de la hauteur de ladite pale (3).

4. Éolienne à axe vertical selon une quelconque des revendications précédentes, **caractérisée en ce que** le développement allongé de ladite pale a une évolution avec géométrie essentiellement troposkine.

5. Éolienne à axe vertical selon une quelconque des revendications précédentes, **caractérisée en ce que** lesdites deux premières valeurs de corde minimums ($c_{min1}$, $c_{min2}$) coïncident.

6. Éolienne à axe vertical selon une quelconque des revendications précédentes, **caractérisée en ce que** lesdites première et deuxième valeurs de corde maximums ($c_{max1}$, $c_{max2}$) coïncident.

7. Éolienne à axe vertical selon une quelconque des revendications précédentes, **caractérisée en ce que** lesdites première et deuxième valeurs de rapport minimums ($(e/c)_{min1}$, $(e/c)_{min2}$) coïncident.

8. Éolienne à axe vertical selon une quelconque des revendications précédentes, **caractérisée en ce que** l'évolution de la corde (c) du profil d'aile (P) en fonction de la hauteur (h) du profil d'aile (P) de ladite pale (3) est symétrique par rapport à la valeur médiane ($h_{med}$) de la hauteur de ladite pale (3), et l'évolution du rapport (e/c) entre l'épaisseur (e) et la corde (c) du profil d'aile (P) en fonction de la hauteur (h) du profil d'aile (P) de ladite pale (3) est symétrique par rapport à la valeur médiane ($h_{med}$) de la hauteur de ladite pale (3).

9. Éolienne à axe vertical selon une quelconque des revendications précédentes, **caractérisée en ce que** les valeurs de l'évolution de la corde (c) normalisée par rapport à sa valeur maximum ($c_{max}$) en fonction de la hauteur (h) de ladite pale (3) normalisée par rapport à la valeur de la hauteur ($h_{max}$) de la pale (3), ainsi que de l'évolution du rapport (e/c) entre l'épaisseur (e) et la corde (c) en fonction de la hauteur (h) de ladite pale (3) normalisée par rapport à la valeur de la hauteur ($h_{max}$) de la pale (3), respectent avec une approximation de $\pm$ 10 % les valeurs du tableau suivant :

| $h/h_{max}$ | $c/c_{max}$ | s/c | | | | | | |
|---|---|---|---|---|---|---|---|---|
| 0.0000 | 0.5288 | 0.1200 | 0.3333 | 0.8363 | 0.2500 | 0.6875 | 0.8674 | 0.2500 |
| 0.0208 | 0.6462 | 0.1278 | 0.3542 | 0.8064 | 0.2500 | 0.7083 | 0.8984 | 0.2500 |
| 0.0417 | 0.7443 | 0.1384 | 0.3750 | 0.7786 | 0.2500 | 0.7292 | 0.9277 | 0.2500 |
| 0.0625 | 0.8243 | 0.1490 | 0.3958 | 0.7540 | 0.2500 | 0.7500 | 0.9536 | 0.2500 |
| 0.0833 | 0.8876 | 0.1574 | 0.4167 | 0.7353 | 0.2500 | 0.7708 | 0.9751 | 0.2500 |
| 0.1042 | 0.9355 | 0.1702 | 0.4375 | 0.7253 | 0.2500 | 0.7917 | 0.9909 | 0.2451 |
| 0.1250 | 0.9693 | 0.1860 | 0.4583 | 0.7227 | 0.2500 | 0.8125 | 0.9997 | 0.2345 |
| 0.1458 | 0.9903 | 0.2033 | 0.4792 | 0.7231 | 0.2500 | 0.8333 | 1.0000 | 0.2201 |
| 0.1667 | 1.0000 | 0.2201 | 0.5000 | 0.7233 | 0.2500 | 0.8542 | 0.9903 | 0.2033 |
| 0.1875 | 0.9997 | 0.2345 | 0.5208 | 0.7231 | 0.2500 | 0.8750 | 0.9693 | 0.1860 |
| 0.2083 | 0.9909 | 0.2451 | 0.5417 | 0.7227 | 0.2500 | 0.8958 | 0.9355 | 0.1702 |
| 0.2292 | 0.9751 | 0.2500 | 0.5625 | 0.7253 | 0.2500 | 0.9167 | 0.8876 | 0.1574 |
| 0.2500 | 0.9536 | 0.2500 | 0.5833 | 0.7353 | 0.2500 | 0.9375 | 0.8243 | 0.1490 |
| 0.2708 | 0.9277 | 0.2500 | 0.6042 | 0.7540 | 0.2500 | 0.9583 | 0.7443 | 0.1384 |
| 0.2917 | 0.8984 | 0.2500 | 0.6250 | 0.7786 | 0.2500 | 0.9792 | 0.6462 | 0.1278 |
| 0.3125 | 0.8674 | 0.2500 | 0.6458 | 0.8064 | 0.2500 | 1.0000 | 0.5288 | 0.1200 |
| | | | 0.6667 | 0.8363 | 0.2500 | | | |

10. Pale pour turbine à axe vertical selon une quelconque des revendications précédentes, **caractérisée en ce qu'**elle prévoit un profil d'aile (P) distingué par :

- une évolution de sa corde (c) en fonction de la hauteur (h) du profil d'aile (P) de ladite pale (3) ayant :

- deux premières valeurs de corde minimums ($c_{min1}$, $c_{min2}$) au niveau respectivement desdites extrémités supérieure et inférieure ($h_{max}$, $h_{min}$) de la hauteur de ladite pale (3) ;
- une deuxième valeur de corde minimum ($c_{min3}$) au niveau d'une valeur médiane ($h_{med}$) de la hauteur de ladite pale (3) et
- une première et une deuxième valeur de corde maximum ($c_{max1}$, $c_{max2}$) au niveau respectivement de deux hauteurs intermédiaires ($h_{int1}$ ed $h_{int2}$) du profil d'aile (P) de ladite pale (3) interposées entre la valeur médiane ($h_{med}$) de la hauteur de ladite pale (3) et respectivement les hauteurs ($h_{min}$, $h_{max}$) desdites extrémités inférieure (4) et supérieure (5) de ladite pale (3) ; la pale étant **caractérisée par** un profil d'aile avec :

- une évolution du rapport (e/c) entre son épaisseur (e) et sa corde (c) en fonction de la hauteur (h) du profil d'aile (P) de ladite pale (3) ayant :

- une première et une deuxième valeur de rapport minimum (($s/c)_{min1}$, $(s/c)_{min2}$) au niveau respectivement desdites extrémités inférieure et supérieure ($h_{min}$, $h_{max}$) de la hauteur de ladite pale (3) ;

- une valeur de rapport maximum $((e/c)_{max})$ au niveau d'une valeur médiane $(h_{med})$ de la hauteur de ladite pale (3).

**Fig. 1**

**Fig. 3**

**Fig. 2**

**Fig. 4A**

**Fig. 4B**

**Fig. 4C**

**Fig. 4D**

**Fig. 5**

**Fig. 6**

EP 2 698 532 B1

**Fig. 7**

**Fig. 8**

**Fig. 9**

| h/H$_{rot}$ | c/c$_{max}$ | s/c |
|---|---|---|
| 0.0000 | 0.5288 | 0.1200 |
| 0.0208 | 0.6462 | 0.1278 |
| 0.0417 | 0.7443 | 0.1384 |
| 0.0625 | 0.8243 | 0.1490 |
| 0.0833 | 0.8876 | 0.1574 |
| 0.1042 | 0.9355 | 0.1702 |
| 0.1250 | 0.9693 | 0.1860 |
| 0.1458 | 0.9903 | 0.2033 |
| 0.1667 | 1.0000 | 0.2201 |
| 0.1875 | 0.9997 | 0.2345 |
| 0.2083 | 0.9909 | 0.2451 |
| 0.2292 | 0.9751 | 0.2500 |
| 0.2500 | 0.9536 | 0.2500 |
| 0.2708 | 0.9277 | 0.2500 |
| 0.2917 | 0.8984 | 0.2500 |
| 0.3125 | 0.8674 | 0.2500 |
| 0.3333 | 0.8363 | 0.2500 |
| 0.3542 | 0.8064 | 0.2500 |
| 0.3750 | 0.7786 | 0.2500 |
| 0.3958 | 0.7540 | 0.2500 |
| 0.4167 | 0.7353 | 0.2500 |
| 0.4375 | 0.7253 | 0.2500 |
| 0.4583 | 0.7227 | 0.2500 |
| 0.4792 | 0.7231 | 0.2500 |
| 0.5000 | 0.7233 | 0.2500 |
| 0.5208 | 0.7231 | 0.2500 |
| 0.5417 | 0.7227 | 0.2500 |
| 0.5625 | 0.7253 | 0.2500 |
| 0.5833 | 0.7353 | 0.2500 |
| 0.6042 | 0.7540 | 0.2500 |
| 0.6250 | 0.7786 | 0.2500 |
| 0.6458 | 0.8064 | 0.2500 |
| 0.6667 | 0.8363 | 0.2500 |
| 0.6875 | 0.8674 | 0.2500 |
| 0.7083 | 0.8984 | 0.2500 |
| 0.7292 | 0.9277 | 0.2500 |
| 0.7500 | 0.9536 | 0.2500 |
| 0.7708 | 0.9751 | 0.2500 |
| 0.7917 | 0.9909 | 0.2451 |
| 0.8125 | 0.9997 | 0.2345 |
| 0.8333 | 1.0000 | 0.2201 |
| 0.8542 | 0.9903 | 0.2033 |
| 0.8750 | 0.9693 | 0.1860 |
| 0.8958 | 0.9355 | 0.1702 |
| 0.9167 | 0.8876 | 0.1574 |
| 0.9375 | 0.8243 | 0.1490 |
| 0.9583 | 0.7443 | 0.1384 |
| 0.9792 | 0.6462 | 0.1278 |
| 1.0000 | 0.5288 | 0.1200 |

# Table 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 1835018 A
- US 5405246 A
- GB 2404227 A
- GB 2451670 A

### Non-patent literature cited in the description

- **M. RACITI CASTELLI ; A. FEDRIGO ; E. BENINI.** Effect of Dynamic Stall, Finite Aspect Ratio and Streamtube Expansion on VAWT Performance Prediction using the BE-M Model. *International Journal of Mechanical and Aerospace Engineering,* 2012, 468-480
- **R. E. SHELDAHL.** Comparison of Field and Wind Tunnel Darrieus Wind Turbine Data. *SAND80-246*